Europäisches Patentamt

European Patent Office

Office européen des brevets

(11) Numéro de publication: **0 169 776**

**A1**

## (12) DEMANDE DE BREVET EUROPEEN

(21) Numéro de dépôt: **85401436.2**

(22) Date de dépôt: **12.07.85**

(51) Int. Cl.⁴: **G 09 B 19/00**
**G 09 B 25/00**

(30) Priorité: **25.07.84 FR 8411820**

(43) Date de publication de la demande:
**29.01.86 Bulletin 86/5**

(84) Etats contractants désignés:
**DE GB IT**

(71) Demandeur: **ORLANE**
**12-14 Rond Point des Champs Elysées**
**F-75386 Paris Cédex 08(FR)**

(72) Inventeur: **Filatoff, Olga**
**163 Avenue Victor-Hugo**
**F-75116 Paris(FR)**

(74) Mandataire: **Beauchamps, Georges et al,**
**Cabinet Z.Weinstein 20, avenue de Friedland**
**F-75008 Paris(FR)**

(54) Système pour la simulation de modelage ou de massage de tout ou partie d'un corps humain.

(57) La présente invention a pour objet un système de simulation de modelage ou de massage.

Un tel système est caractérisé en ce qu'il comprend un dispositif sensible au toucher (3) ayant la forme de la partie (B) du corps humain et comportant au moins une zone à modeler ou masser ; un dispositif de visualisation de la partie du corps humain relié audit dispositif sensible et comprenant une première pluralité d'éléments de signalisation (D1), notamment lumineuse, indiquant que l'opération de massage s'effectue effectivement dans la zone déterminée.

La présente invention trouve application dans le domaine de l'esthétique.

FIG.2

Croydon Printing Company Ltd

Système pour la simulation de modelage ou de massage
de tout ou partie d'un corps humain.

La présente invention concerne un système pour la simulation de modelage ou massage de tout ou partie d'un corps humain.

Un tel système est notamment utilisé pour l'apprentissage par exemple du modelage ou du massage facial dans des instituts de beauté, soit par des stagiaires ou élèves souhaitant apprendre une méthode de manoeuvres faciales prescrite, soit par des personnes utilisant des produits de beauté et désirant les appliquer de la façon la plus judicieuse et la plus efficace. Ceci étant pris à titre d'exemple et pouvant être utilisé pour tout autre partie du corps humain.

Jusqu'à maintenant, les personnes s'exerçaient aux techniques de modelage ou massage à partir d'un mannequin.

Cependant, cette méthode connue ne convient pas du tout à des personnes en initiation puisqu'elles ont tendance à effectuer de façon imprécise le massage de la zone concernée et à ainsi dépasser cette zone sans pour autant en être averties.

La présente invention a pour but de remédier à l'inconvénient ci-dessus mentionné.

Pour cela, la présente invention a pour but un système pour la simulation de modelage ou massage d'au moins une zone déterminée d'une partie d'un corps humain, telle que par exemple un buste, ledit système étant caractérisé en ce qu'il comprend un dispositif sensible au toucher ayant la forme de la partie du corps humain et comportant la zone à modeler ou à masser ; un dispositif de visualisation de la partie du corps humain relié audit dispositif sensible et comprenant une première pluralité d'éléments de signalisation visuelle, par exemple lumineuse, indiquant que l'opération de massage s'effectue effectivement dans la zone déterminée.

Selon une caractéristique de l'invention, le dispositif de visualisation comprend également une deuxième pluralité d'éléments de signalisation indiquant tout dépassement de la zone de modelage ou massage durant l'opération de massage. Ce système pourrait ou non être utilisé.

Selon encore une autre caractéristique de l'invention, le dispositif sensible au toucher comprend une première couche externe en une matière souple, telle qu'un élastomère ; une première pluralité d'éléments de détection disposée sous la première couche suivant une configuration prédéterminée correspondant à la zone à modeler ou masser, lesdits éléments de détection étant reliés aux éléments de signalisation de la première pluralité précitée, de sorte que la détection par chaque élément de détection d'une déformation de la première couche commande au moins un élément de signalisation de la première pluralité d'éléments de signalisation.

Selon encore une autre caractéristique de l'invention, les éléments de signalisation de la première pluralité précitée sont disposés sur le dispositif de visualisation suivant une configuration identique à celle des éléments
de détection de la première pluralité d'éléments de
détection.

Selon toujours une autre caractéristique de l'invention,
le système comprend également une deuxième pluralité
d'éléments de détection disposés sous la première couche
précitée et délimitant la première pluralité précitée
d'éléments de détection, la deuxième pluralité précitée
de signalisation délimitant les éléments de la première
pluralité précitée d'éléments de signalisation ; à un
élément de détection de la deuxième pluralité étant
associé au moins un élément de signalisation de la deuxième pluralité de sorte que la détection par l'un des
éléments de détection de la deuxième pluralité d'une
déformation de la première couche commande au moins l'un
des éléments de signalisation de la deuxième pluralité
d'éléments de signalisation.

Selon encore une autre caractéristique de l'invention,
le dispositif sensible au toucher comprend également une
deuxième couche disposée sous la première couche précitée
et dans laquelle sont insérées les première et seconde
pluralités d'éléments de détection précitées ; et une
plaque rigide de support disposée sous la deuxième
couche.

Selon encore une autre caractéristique de l'invention,
les éléments de détection précités sont des contacts
métalliques électriquement reliés par des conducteurs
à travers la plaque de support précitée aux éléments de
signalisation précités, une plaque conductrice souple
étant disposée entre les première et seconde couches
précitées tout en étant disposée au-dessus des contacts
métalliques de façon espacée à l'état repos.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :

- la figure 1 est une vue en perspective du système de simulation de modelage ou massage selon l'invention;

- la figure 2 représente un premier mode de réalisation du système selon l'invention;

- la figure 3 représente un exemple d'une configuration selon laquelle certains des éléments de signalisation sont disposés sur le dispositif de visualisation,

- la figure 4 représente un autre mode de réalisation de la détection de la déformation d'une partie de la zone massée, et

- la figure 5 représente un deuxième mode de réalisation d'un système de simulation de modelage ou massage selon l'invention.

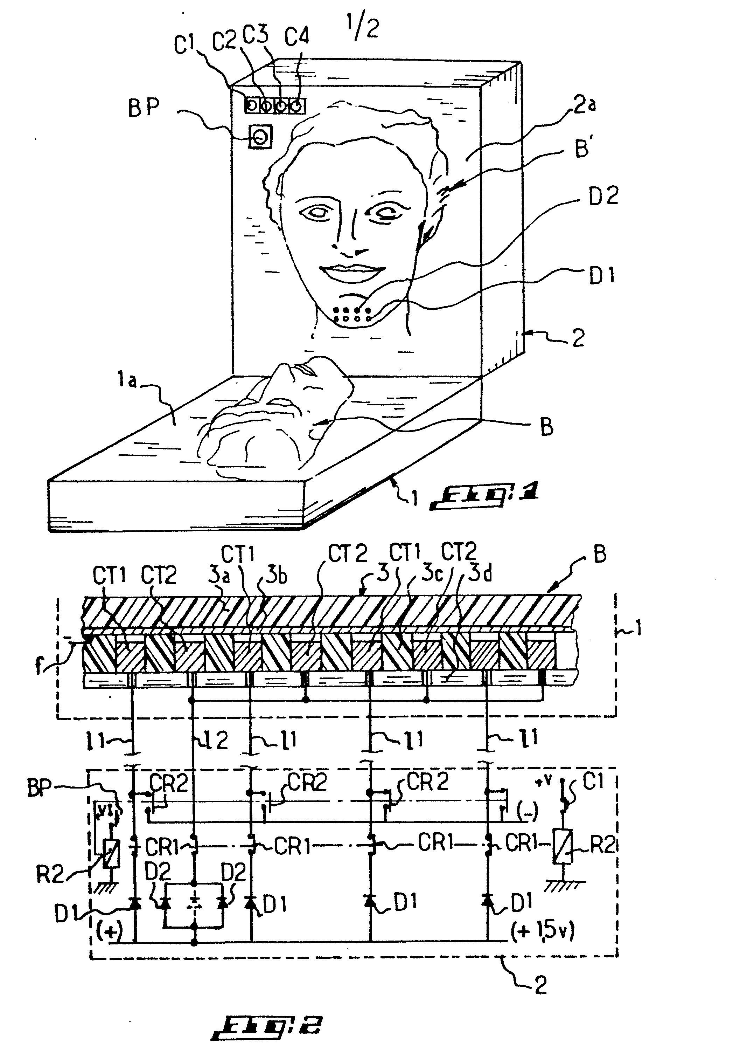

La vue en perspective de la figure 1 montre un exemple de présentation du système de simulation de massage selon l'invention qui consiste en deux boîtiers 1,2 de forme sensiblement parallélépipédique et articulés l'un par rapport à l'autre par des moyens connus en soi tels que par exemple une charnière afin de pouvoir être disposés perpendiculairement entre eux comme représenté. Un tel système peut ainsi être replié de manière que les faces avant 1a et 2a des boîtiers 1 et 2 se trouvent sensiblement dans un même plan, ce qui permet de loger l'ensemble dans une malette portable.

Sur la face 1a du boîtier 1 est disposé et fixé un buste B réalisé suivant une configuration tridimensionnelle pour représenter en grandeur réelle et avec exactitude un buste de corps humain. Ce buste servira à apprendre à modeler ou masser une zone déterminée par une personne s'initiant à la technique de modelage ou massage.

Sur la face 2a du boîtier 2 est également disposé un buste B' formant dispositif de visualisation qui est une reproduction identique du buste B et qui peut soit également être réalisé tridimensionnellement, soit être réalisé en deux dimensions.

La figure 1 montre également la présence de contacteurs de sélection C1 à C4 et d'un bouton-poussoir de test BP dont les rôles et fonctionnement seront décrits ultérieurement, ceux-ci pouvant être également commandés au pied, par d'autres commutateurs branchés en parallèle sur les premiers (non représentés).

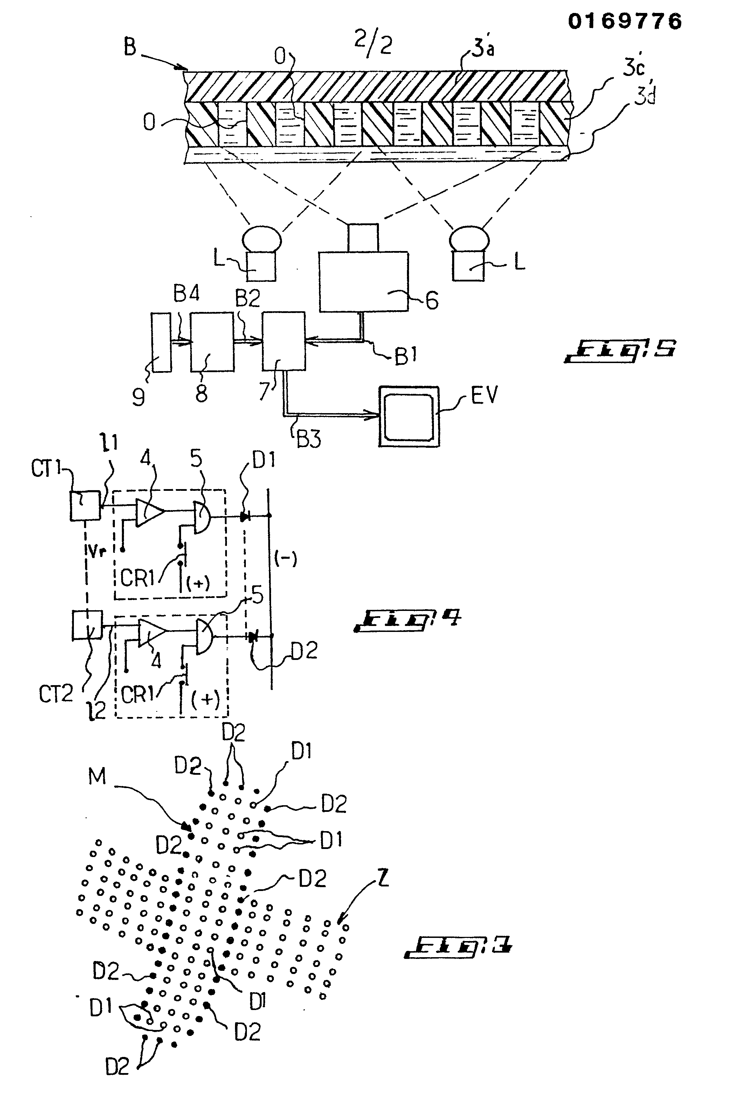

La figure 2 représente le premier mode de réalisation du système de simulation proprement dit.

Cette figure ne montre en fait qu'une partie du buste B sectionnée selon un plan perpendiculaire à la face 1a du boîtier 1 avec la surface externe du buste plane, étant bien entendu qu'elle a en réalité la forme externe du buste.

Le buste B est constitué par un dispositif sensible au toucher 3 comprenant, de l'extérieur vers l'intérieur du buste, une première couche externe 3a en une matière souple, telle qu'un élastomère, imitant au mieux les caractéristiques de la peau humaine ; une plaque métallique souple conductrice 3b ; une deuxième couche 3c également en un matériau élastomère et une plaque rigide de support 3d réalisée par exemple en verre époxy. Des contacts CT1, CT2, par exemple en forme de petite pastille cylindrique ou cubique, ou en forme de flèche ou tout autre forme, sont insérés à l'intérieur de la deuxième couche en élastomère 3c. Ces contacts sont réalisés en un matériau électriquement conducteur, tel que du cuivre, et ont leurs zones de contact disposées en dessous de la plaque métallique souple 3b de façon espacée par rapport à celle-ci.

Le procédé de fabrication à partir de techniques de moulage d'un tel buste comprend les étapes suivantes. On fabrique tout d'abord le support rigide interne 3d du buste sur lequel on place les différents contacts CT1, CT2. On coule ensuite dans les espaces définis entre les différents contacts le matériau en élastomère 3c de manière que sa surface supérieure soit en affleurement avec la surface supérieure des contacts. Puis, on retire par gravure chimique à l'aide d'un acide suivant une épaisseur déterminée une partie du cuivre des contacts pour ainsi définir un espace entre leurs zones de contact et la plaque 3b posée sur la couche 3c, la couche 3a étant alors coulée sur la plaque 3b.

La plaque conductrice 3b est soudée à un fil conducteur _f_ relié à un pôle négatif d'alimentation. Les différents éléments de contact CT1 sont reliés par l'intermédiaire de conducteurs l 1  passant à travers la plaque du support 3d au dispositif de visualisation du boîtier 2 tandis que les éléments de contact CT2 sont reliés en commun par des conducteurs (non référencés) passant à travers la plaque de support 3d à un fil l 2  également relié au dispositif de visualisation.

Le dispositif de visualisation comprend une première pluralité d'éléments de signalisation D1 qui sont dans le cas présent des diodes à émission de lumière dites LED. Les anodes des diodes D1 sont reliées en commun à un pôle positif d'alimentation, par exemple de 1,5 volts, et ont chacune de leurs cathodes reliée au fil conducteur 1 1 de chaque contact CT1 par l'intermédiaire d'un contact de relais CR1 disposé en série entre chaque diode et le fil conducteur. Les contacts de relais CR1 sont commandés simultanément par un relais R1 alimenté par une tension V lorsque le contacteur de sélection C1 est fermé.

Le dispositif de visualisation comporte également une deuxième pluralité d'éléments de signalisation D2 constituée par exemple par des diodes LED reliées en parallèle avec leurs anodes reliées à la borne positive d'alimentation de 1,5 volts et leurs cathodes reliées au fil conducteur 1 2 par l'intermédiaire d'un contact de relais CR1 en série entre les diodes D2 et le fil conducteur 1 2 et actionné en concomitance avec les autres contacts de relais CR1 associés aux diodes D1 par le relais R1. Il est à noter que tous les contacts de relais CR1 sont représentés à l'état de travail, c'est-à-dire fermés.

Comme il ressort également de la figure 2, des contacts de relais CR2 commandés simultanément par un relais R2 relient un point de chaque fil conducteur 1 1 entre chaque contact CR1 et chaque élément de détection CT1 à un potentiel négatif d'alimentation. Les contacts CR2 sont représentés à l'état repos et sont fermés lors de l'actionnement (fermeture) du bouton-poussoir de test BP, ce qui a pour effet d'allumer les diodes D1.

Les éléments de détection ou de contact CT1 constituent une première pluralité d'éléments tandis que les éléments de contact CT2 constituent une seconde pluralité d'éléments.

La première pluralité d'éléments de signalisation D1 est disposée sur la face avant 2a du boîtier 2 et sur une partie prédéterminée du buste B' suivant une configuration prédéterminée correspondant à une zone à masser prédéterminée du buste et choisie par exemple par appui sur l'élément contacteur C1, ce qui amène la première pluralité d'éléments de détection CT1 à être disposée sous l'élastomère 3a suivant une configuration déterminée identique à celle des éléments de signalisation D1. La figure 3 montre à titre d'exemple une disposition particulière d'éléments de signalisation D1 représentative d'une zone précise à masser telle que par exemple le menton M, quelques uns des éléments D1 étant également représentés au menton du buste de la figure 1 à titre de compréhension.

La figure 3 montre également la présence des éléments de signalisation D2 délimitant et entourant complètement les éléments de signalisation D1. La deuxième pluralité d'éléments de signalisation D2 ainsi disposée représente les limites de la zone du menton. Certains des éléments de la deuxième pluralité d'éléments D2 sont également représentés en figure 1. Bien entendu, les éléments de contact CT2, une fois la sélection par l'élément contacteur C1 effectuée, sont également disposés autour des éléments de contact CT1 pour définir la zone à masser.

Le fonctionnement du sytème ci-dessus décrit de l'invention est le suivant.

Avant toute opération de massage, la personne utilisatrice du système selon l'invention sélectionne la zone prédéterminée à masser. Pour cela, elle appuie sur l'un des éléments contacteurs C1 à C4, par exemple l'élément contacteur C1 qui, après relâchement, est maintenu fermé. Le relais R1 est alors alimenté pour exciter les contacts de relais CR1 qui sont fermés comme représenté en figure 2. Dans ces conditions, la personne utilisatrice a donc sélectionné le menton comme zone à masser. Elle peut d'ailleurs vérifier cette sélection en appuyant sur le bouton-poussoir de test BP qui alimente le relais R2 excitant les contacts de relais CR2, allumant ainsi la première pluralité de diodes de signalisation D1, par exemple de couleur verte.

La personne utilisatrice se place alors face au buste B' avec la tête du buste B dirigée vers celle-ci de manière à se trouver dans les conditions habituelles de modelage ou de massage. Tout mouvement de pression exercé par les doigts de la personne sur le buste B s'accompagne d'une déformation de la première couche d'élastomère 3a et donc de la déformation de la plaque métallique souple 3b qui vient alors contacter la zone supérieure d'un élément de détection CT1, ce qui a pour effet de mettre au potentiel négatif la cathode de la diode D1 correspondante. Cette diode, de couleur verte, s'allume alors sur le dispositif de visualisation (buste B') pour indiquer à l'opératrice que le massage s'effectue dans les conditions normales, c'est-à-dire dans la zone à masser. Ainsi, dans les conditions normales, durant l'opération de massage, les diodes D1 s'illuminent à tour de rôle à chaque pression exercée sur la première couche 3a s'accompagnant de la mise en contact de la plaque métallique souple 3b à tout élément correspondant de détection CT1.

Si l'opératrice déborde ou dépasse la zone à masser prédéterminée, un contact s'établit alors entre l'un des éléments de détection CT2 et la plaque conductrice 3b, ce qui a pour effet d'allumer sur le dispositif de visualisation (buste B') au moins certains des éléments de la deuxième pluralité d'éléments de signalisation D2, de couleur rouge. L'illumination de ces diodes D2 indique ainsi à l'opératrice un dépassement de la zone de massage prédéterminée.

La figure 3 montre d'ailleurs par des points noirs l'illumination de tous les éléments de signalisation D2 de couleur rouge et correspondant à un dépassement de la zone à masser. Il est possible de mieux renseigner l'opératrice de la direction du dépassement de la zone à masser en associant les éléments de signalisation D2 situés latéralement à droite en figure 3 à certains des éléments de détection CT2, les éléments de signalisation D2 situés latéralement à gauche à d'autres éléments de détection CT2 et les autres éléments de signalisation des deux autres côtés opposés à d'autres éléments de détection CT2.

Bien entendu, chaque autre élément contacteur C2, C3 et C4 est relié à un relais correspondant excitant des contacts de relais pour définir une nouvelle zone à masser représentée par une autre première pluralité d'éléments de signalisation (diodes vertes) et délimitée par une autre deuxième pluralité d'éléments de signalisation (diodes rouges). La figure 3 représente d'ailleurs une autre zone Z définie par un tel agencement de diodes et intersectant la zone du menton M. De plus, il est également possible de définir une zone plus complète du buste, par exemple tout le visage, en appuyant successivement sur tous les éléments contacteurs C1 à C4. Enfin, il est possible d'associer à chaque élément de détection CT1 non plus un mais plusieurs éléments de signalisation D1 en parallèle de sorte que la mise en contact de la plaque 3b sur un élément de détection CT1 illumine en vert une partie de la zone en train d'être massée sur le buste B.

La figure 4 représente un autre mode de réalisation du dispositif de détection de la déformation de la première couche 3a lors de l'opération de massage.

Dans ce dispositif, les éléments de détection CT1, CT2 sont constitués par des capteurs sensibles à la pression régnant dans l'espace entre la zone supérieure de chaque élément de contact et la première couche 3a disposée dans le cas présent directement sur la deuxième couche 3c (la plaque métallique conductrice 3b n'étant plus nécessaire). De tels capteurs peuvent être par exemple du type piézo-électrique, piézo-résistif ou capacitif, ou autre permettant de transformer en un signal électrique une pression. La sortie de chacun de ces éléments de détection est reliée, par une ligne conductrice 11 passant à travers la plaque de support en verre (non représentée), à une première entrée d'un comparateur 4, dont la sortie est reliée à une première entrée d'une porte logique ET 5 dont la sortie est reliée à l'anode d'une diode D1 formant élément de signalisation d'une première pluralité d'éléments de signalisation associée à l'élément de détection CT1 comme représenté en figure 4. La deuxième entrée du comparateur 4 tout comme d'ailleurs les deuxièmes entrées des autres comparateurs utilisés est reliée à une tension de seuil Vr tandis que la deuxième entrée de la porte ET 5 est reliée par l'intermédiaire du contact de relais CR1 à un pôle positif d'alimentation. Bien entendu, toutes les deuxièmes entrées des portes ET 5 sont également reliées à ce même potentiel d'alimentation par l'intermédiaire d'un contact CR1. La figure 4 montre également l'utilisation d'une diode D2 formant élément de signalisation de la deuxième pluralité d'éléments de signalisation et associée à un élément de détection CT2. Comme pour le premier mode de réalisation, les éléments de détection CT1 situés sous la première couche 3a sont disposés selon une configuration déterminée identique à la configuration déterminée par les éléments de la première pluralité d'éléments de signalisation, cette configuration correspondant à une zone à masser. De même, les éléments de détection CT2 sont agencés selon une configuration correspondant à celle des éléments de la deuxième pluralité d'éléments de signalisation D2 et correspondant à la limite de la zone à masser. Les cathodes des diodes D1, D2 sont reliées en commun au pôle négatif d'alimentation.

Puisque seule change la manière de détecter la déformation de la première couche 3a durant l'opération de massage, on ne décrira uniquement que celle-ci, étant bien entendu que le principe de visualisation par le dispositif de l'opération de massage à l'intérieur ou à l'extérieur de la zone déterminée est identique à celui décrit dans le cas du premier mode de réalisation. Suite au déplacement vers le bas de la première couche 3a durant l'opération de massage, une augmentation de pression se crée dans l'espace correspondant défini entre chaque élément de détection et la première couche 3a. Cette pression est convertie en un signal électrique appliqué à la première entrée du comparateur 4 et lorsque la grandeur de ce signal dépasse le seuil Vr un signal positif est appliqué en sortie de ce comparateur et donc à l'entrée de la porte ET 5. Puisque l'on a préalablement choisi une zone déterminée à masser par appui d'un élément contacteur, par exemple C1, le contact de relais CR1 est fermé. Un signal positif est donc appliqué à l'anode de la diode D1 de manière à allumer celle-ci.

La figure 5 représente un deuxième mode de réalisation du système de simulation de massage selon la présente invention.

Celui-ci comprend comme pour le premier mode de réalisation un dispositif sensible au toucher faisant partie du buste B et comprenant de l'extérieur vers l'intérieur une première couche 3'a, une deuxième couche 3'c et une plaque rigide de support 3'd, les première et deuxième couches 3'a, 3'c étant respectivement identiques aux couches 3a, 3c du premier mode de réalisation, tandis que la plaque de support 3'd est en verre transparent.
Des orifices O pratiqués à travers la couche 3'c sont remplis d'un liquide, par exemple de l'eau, des moyens d'étanchéité (non représentés) étant prévus bien entendu entre les première et deuxième couches et la deuxième couche et la plaque de support pour éviter toute fuite. Une caméra vidéo 6 est prévue derrière la plaque de support 3'd, des moyens d'éclairage, dans le cas présent des lampes L, étant également prévus derrière la plaque 3'd pour diriger leurs faisceaux lumineux en direction et à travers celle-ci. La caméra vidéo 6 est reliée par l'intermédiaire d'un bus unidirectionnel B1 à un circuit de comparaison 7 qui reçoit également par l'intermédiaire d'un bus unidirectionnel B2 des informations d'une mémoire vive 8. La sortie du circuit de comparaison 7 est reliée par l'intermédiaire d'un bus unidirectionel B3 au dispositif de visualisation qui, dans le cas présent, est un écran de télévision EV visualisant l'image B' du buste B. Dans la mémoire vive 8 peut être stockée de façon sélective par un organe de sélection 9 relié à celle-ci par l'intermédiaire d'un bus unidirectionnel B4 une matrice d'éléments définissant une zone à masser prédéterminée du buste B. Dans ce système, les orifices remplis d'eau de la deuxième couche 3'c n'ont pas besoin d'être disposés pour former une matrice d'éléments correspondant à une zone à masser avant toute opération de massage. Il est à noter que dans les conditions initiales, c'est-à-dire avant l'opération de massage mentionnée, l'eau a un indice de réfraction $n$

qui variera pendant l'opération de massage. La caméra vidéo 6 envoie donc au circuit de comparaison 7 une image vidéo représentant la matrice définie par les orifices contenant l'eau et qui est comparée à la matrice stockée dans la mémoire vive 8. Si aucune modification de l'indice de réfraction de l'eau n'a été détectée (ce qui correspond à aucune opération de massage de la zone déterminée) aucun signal n'est émis en sortie du circuit de comparaison et l'écran EV visualise tout simplement le buste B. Lors de la modification de l'indice de réfraction de l'eau contenue par exemple dans l'un des orifices de la deuxième couche 3'c suite à un enfoncement durant l'opération de massage de la première couche 3'a, le circuit de comparaison 7 émet alors un signal à l'écran de visualisation EV lequel indique par un point lumineux, soit une opération de massage à l'intérieur de la zone considérée (point lumineux vert), soit une opération de massage en dehors de la zone considérée (point lumineux rouge). Bien entendu, il y a autant de points lumineux verts et rouges que nécessaire pour définir la zone à masser et les limites de celle-ci.

Dans ce deuxième mode de réalisation, les éléments contacteurs C1 à C4 et le bouton-poussoir BP décrits en figure 1 peuvent également être utilisés. Ainsi, l'action sur l'un des éléments contacteurs C1 à C4 permettra à l'organe de sélection 9 relié à l'élément contacteur d'émettre un code binaire approprié vers la mémoire vive pour stocker dans celle-ci la matrice correspondant à la zone à masser. De même, le bouton-poussoir de test BP peut être relié à l'organe de sélection 9 pour la visualisation de la zone à masser sur l'écran EV.

Il est bien entendu que le système de l'invention n'est pas limité à l'utilisation de quatre éléments contacteurs C1 à C4 et que l'on peut en prévoir plus ou moins suivant le nombre de zones ou parties du corps humain à modeler ou masser.

Revendications.

1. Système pour la simulation de modelage ou massage de tout ou partie d'un corps humain, caractérisé en ce qu'il comprend un dispositif sensible au toucher (3) ayant la forme de la partie du corps humain et comportant au moins une zone à modeler ou masser ; un dipositif de visualisation (B', EV) de la partie du corps humain relié audit dispositif sensible et comprenant une première pluralité d'éléments de signalisation (D1), notamment lumineuse, indiquant que l'opération de massage s'effectue effectivement dans la zone déterminée.

2. Système selon la revendication 1, caractérisé en ce que le dispositif de visualisation précité comprend également une deuxième pluralité d'éléments de signalisation (D2) indiquant tout dépassement de la zone de massage précitée durant l'opération de massage.

3. Système selon la revendication 1, caractérisé en ce que le dipositif sensible au toucher précité comprend une première couche (3a) en une matière souple, telle qu'un élastomère ; une première pluralité d'éléments de détection (CT1) disposée sous la première couche suivant une configuration prédéterminée correspondant à la zone à masser, lesdits éléments de détection (CT1) étant reliés aux éléments de signalisation (D1) précités de la première pluralité d'éléments de signalisation précitée, de sorte que la détection par chaque élément de détection (CT1) d'une déformation de la première couche (3a) commande au moins un élément de signalisation (D1) de la première pluralité d'éléments de signalisation.

4. Système selon l'une des revendications 1 à 3, caractérisé en ce que les éléments de signalisation de la première

pluralité d'éléments (D1) sont disposés sur le dispositif de visualisation (B') suivant une configuration identique à celle des éléments de détection de la première pluralité d'éléments de détection (CT1).

5. Système selon l'une des revendications précédentes, caractérisé en ce qu'il comprend également une deuxième pluralité d'éléments de détection (CT2) disposée sous la première couche précitée et délimitant la première pluralité précitée d'éléments de détection (CT1) ; la deuxième pluralité précitée d'éléments de signalisation (D2) délimitant les éléments de la première pluralité précitée d'éléments de signalisation (D1) ; à un élément de détection de la deuxième pluralité étant associé au moins un élément de signalisation de la deuxième pluralité de sorte que la détection par l'un des éléments de détection de la deuxième pluralité d'une déformation de la première couche (3a) commande au moins l'un des éléments de signalisation de la deuxième pluralité d'éléments de signalisation.

6. Système selon l'une des revendications précédentes, caractérisé en ce que le dispositif sensible au toucher précité comprend une deuxième couche (3c) disposée sous la première couche précitée et dans laquelle sont implantées les première et seconde pluralités d'éléments de détection précitées ; et une couche rigide de support (3d) disposée sous ladite deuxième couche.

7. Système selon la revendication 6, caractérisé en ce que la deuxième couche précitée est en matériau élastomère tandis que la couche de support précitée est en verre époxy ou autre matière isolante.

8. Système selon l'une des revendications précédentes, caractérisé en ce que les éléments de détection précités

(CT1, CT2) sont des contacts métalliques électriquement reliés par des conducteurs (11, 12) à travers la couche de support précitée (3d) aux éléments de signalisation (D1,D2) précités ; et en ce qu'une plaque conductrice souple (3b) est disposée entre la première et deuxième couche précitée tout en étant disposée au-dessus des contacts métalliques de façon espacée à l'état repos.

9. Système selon l'une des revendications 1 à 7, caractérisé en ce que les éléments de détections précités (CT1, CT2) sont des capteurs sensibles à une pression exercée sur la première couche précitée et électriquement reliés aux éléments de signalisation (D1, D2) précités par l'intermédiaire d'un dispositif comparateur (4) indiquant si la pression exercée dépasse une valeur de seuil prédéterminée (Vr).

10. Système selon l'une des revendications précédentes, caractérisé en ce qu'il comprend de plus un dipositif de sélection d'une zone déterminée à masser.

11. Système selon la revendication 10, caractérisé en ce que le dispositif de sélection précité comprend au moins un élément contacteur (C1) relié à un relais (R1) actionnant une pluralité de contacts (CR1) reliant les éléments de détection (CT1, CT2) précités aux éléments de signalisation (D1, D2) pour définir la zone à masser et sa délimitation.

12. Système selon l'une des revendications 1 à 7, 9 à 11, caractérisé en ce que dans le cas où les éléments de détection sont des capteurs de pression, chaque contact de relais précité est appliqué à l'entrée d'une porte logique ET (5) dont l'autre entrée reçoit la sortie d'un comparateur (4) du dispositif comparateur précité.

13. Système selon l'une des revendications précédentes, caractérisé en ce qu'il comprend un bouton-poussoir de test (BP) relié à un relais (R2) pour actionner des contacts (CR2) pour visualiser momentanément la zone déterminée à masser.

14. Système selon l'une des revendications précédentes, caractérisé en ce que les éléments de signalisation précités sont des diodes LED.

15. Système selon la revendications 1 ou 2, caractérisé en ce que le dispositif sensible au toucher précité comprend une première couche externe (3'a) en une matière souple, telle qu'un élastomère ; une plaque de support rigide (3'c) notamment en verre transparent ; une deuxième couche (3'b) entre la première couche et la plaque de support, de préférence en élastomère, et traversée par des orifices contenant un liquide ayant un indice de réfraction prédéterminé à l'état repos ; une caméra vidéo (6) disposée derrière la plaque de support ; des moyens pour analyser l'image vidéo reçue de la caméra et signaler au dispositif de visualisation (EV) toute modification de l'indice de réfraction du liquide à une lumière émise vers celui-ci afin d'indiquer s'il y a ou non dépassement de la zone en train d'être massée.

16. Système selon la revendication 15, caractérisé en ce que les moyens d'analyse précités comprennent un circuit de comparaison (7), une mémoire (8) dans laquelle est stockée une matrice choisie représentative de la zone déterminée à masser, ledit circuit de comparaison comparant l'image vidéo de la caméra précitée à ladite matrice.

17. Système selon la revendication 15 ou 16, caractérisé en ce que le dispositif de visualisation précité est un écran de télévision.

1/2

FIG. 1

FIG. 2

_Fig. 5_

_Fig. 4_

_Fig. 3_

Office européen
des brevets

# RAPPORT DE RECHERCHE EUROPEENNE

EP 85 40 1436

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| Y | US-A-2 207 153 (BERNARD D. JUDOVICH) * Page 1, colonne 1, lignes 14-42, figures 1-5 * | 1,2 | G 09 B 19/00 G 09 B 25/00 |
| A | | 3-5,8 | |
| | --- | | |
| Y,A | MACHINE DESIGN, vol. 16, 6 juillet 1967, pages 42-45, Penton inc., Cleveland, US:"Doctors train in plastic cadaver" * Page 42, colonne 1, paragraphe 2, colonne 2, paragraphe 3; page 43, figure a gauche * | 1,2,9 | |
| | --- | | |
| A | DE-B-1 120 187 (A. & J. KOPPITZ) * Colonne 1, lignes 3-5, 42-46; colonne 3, lignes 23-28; figure 1 * | 1,7 | DOMAINES TECHNIQUES RECHERCHES (Int. Cl.4) A 61 H G 09 B |
| A | GB-A-1 118 190 (HOLGER HESSE) * Page 1, lignes 8-10,22-25,53-59,70-73; figures 4-6 * | 1 | |
| | --- | | |
| A | EP-A-0 044 642 (AMERICAN HEART ASSOCIATION) * Résumé; figures 2-6,15 * | 15-17 | |
| | ---    -/- | | |

Le présent rapport de recherche a été établi pour toutes les revendications

| Lieu de la recherche | Date d'achèvement de la recherche | Examinateur |
|---|---|---|
| LA HAYE | 30-08-1985 | ODGERS M.L. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | FR-A-2 357 018 (UNIVERSITY OF STRATHCLYDE) * Page 1, lignes 31-39; page 2, lignes 1-13; figures 4,5 * | 12 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 30-08-1985 | ODGERS M.L. |